Europäisches Patentamt

European Patent Office

Office européen des brevets

(11) Veröffentlichungsnummer: **0 389 998 B1**

(12) **EUROPÄISCHE PATENTSCHRIFT**

(45) Veröffentlichungstag der Patentschrift: **24.08.94**

(51) Int. Cl.5: **C08L 77/10**, C08L 77/12

(21) Anmeldenummer: **90105611.9**

(22) Anmeldetag: **24.03.90**

Die Akte enthält technische Angaben, die nach dem Eingang der Anmeldung eingereicht wurden und die nicht in dieser Patentschrift enthalten sind.

(54) **Kälteschlagzähe, pigmentverträgliche thermoplastische Formmassen.**

(30) Priorität: **30.03.89 CH 1153/89**

(43) Veröffentlichungstag der Anmeldung:
**03.10.90 Patentblatt  90/40**

(45) Bekanntmachung des Hinweises auf die Patenterteilung:
**24.08.94 Patentblatt  94/34**

(84) Benannte Vertragsstaaten:
**DE ES FR GB IT NL**

(56) Entgegenhaltungen:
FR-A- 2 592 388
GB-A- 2 198 258

DERWENT, Nr. 85-041540/07, Derwent Publications Ltd, London, GB;& JP-A-107 905

PATENT ABSTRACTS OF JAPAN, Band 12, Nr. 82 (C-481)[2929], 15. März 1988, Seite 129 C 481 & JP-A-62 218 433

Encyclopedia of Polymer Science and Engineering, 2nd Edition (1988) vol. 11, p.345

Carlowitz, Kunststoff Tabellen, 3. Auflage (1986), Seiten 56-57, 70-71

(73) Patentinhaber: **EMS-INVENTA AG**
**Selnaustrasse 16**
**CH-8001 Zürich (CH)**

(72) Erfinder: **Dalla Torre, Hans, Dr. pho.**
**Via Cuschas 7**
**CH-7013 Domat/Ems (CH)**
Erfinder: **Liedloff, Hans-Jörg, Dr. rer. nat.**
**Unter Bahnhofstrasse 59**
**CH-7013 Domat/Ems (CH)**
Erfinder: **Kerschbaumer,Franz Dr. rer. nat.**
**Dipl.-Chem.**
**Ringstrasse 54**
**CH-7000 Chur (CH)**

**Beschreibung**

Die Erfindung betrifft kälteschlagzähe, pigmentverträgliche thermoplastische Formmassen mit einstellbarer Steifheit aus Polyamidelastomeren, amorphen Copolyamiden und Copolyolefinen.

Sie betrifft insbesondere auf Spritzgussmaschinen oder Extrusionsanlagen leicht verarbeitbare 4-Komponenten-Blends, welche im wesentlichen aus aus preiswerten Rohstoffen herstellbaren amorphen Copolyamiden, preiswerten elastomeren Blockpolyetherpolyamiden und Blockpolyetheresterpolyamiden sowie marktgängigen modifizierten Copolyolefinen bestehen und sich durch hohe Kälteschlagzähigkeit, gute Duktilität, variabel einstellbare und vom Feuchtigkeitsgrad nahezu unabhängige Steifheit und ausgezeichnete Pigmentverträglichkeit, ferner durch gute Spannungsrissbeständigkeit, Wärme- und Formstabilität auszeichnen.

Die US-PS 4 410 661 beschreibt polymere Verbindungen, welche aus amorphen Copolyamiden, Polyamid 66 und einem modifizierten Copolyolefin bestehen. Dieser Legierungstyp ist kerbschlagzäh und besonders steif. Seine Steifheit ist aber aufgrund des hohen Polyamid-6,6-Anteils stark vom Feuchtigkeitsgehalt des Materials abhängig.

Weitere, die Verarbeitung beeinflussende Nachteile sind die hohe Viskosität und die Neigung zu Sprödigkeit bei niederen Temperaturen. Besonders nachteilig ist die schlechte Pigmentverträglichkeit, die zu strukturierten rauhen Oberflächen mit Marmorierungseffekten führt.

Kerbschlagzähe Verbindungen werden in der US-PS 4 536 541 beschrieben, welche mit modifizierten EPDM-Polymeren modifizierte schlagzähe amorphe Copolyamide zum Inhalt hat. Diese Legierungen besitzen sehr hohe, schwer zu beherrschende Schmelzviskositäten. Sie neigen wegen der geringen Kompatibilität ihrer Komponenten zur Delaminierung. Ausserdem sind sie spannungsrissempfindlich und ergeben mit Farbpigmenten äusserst schlechte Oberflächen.

Damit sind ihre Anwendungsmöglichkeiten stark eingeschränkt.

In der CH-PS 655 941 und der nahezu identischen EP-A 0 233 428 werden flexible Polyamid-Legierungen beschrieben, welche neben Polyamid-Elastomeren und olefinischen Elastomeren aus semikristallinen Polyamid-Typen, bevorzugt Polyamid 12, bestehen und somit keine amorphen Polyamide als Cokomponenten enthalten, weil deren hohe Steifheit der Zielsetzung, flexible Zusammensetzungen zu schaffen, entgegenstehen. Solche Polymer-Legierungen sind aufgabengemäss elastische Materialien, die sich durch niedrige Elastizitäts-Modul-Werte auszeichnen, mit zusätzlich verbesserter Kälteschlagzähigkeit, die jedoch durch Feuchtigkeitsaufnahme stark beeinträchtigt werden.

Bei guter Verarbeitbarkeit sind sie teuer und können für Anwendungen, bei welchen grössere Steifheit unerlässlich ist, nicht eingesetzt werden.

Die in den Patent-Anmeldungen JP 61 025 114 und JP 59 188 603 bekanntgemachten Blends aus Polyamidelastomeren, in welchen auch amorphe Copolyamide eingesetzt werden, ergeben Formmassen, deren Fliesstemperatur gezielt tief eingestellt ist, um die für Lichtwellenleiter-Ummantelungen geforderten hohen Extrusionsgeschwindigkeiten erreichen zu können. Diese Produkte sind für Anwendungen mit höherem Steifheitsanspruch, wie Konstruktionsteile, ungeeignet. Auch für diese Legierungen sind die Rohstoffkosten wegen des Anteils an Monomeren des PA 12 sehr hoch, weshalb sie von einem Einsatz, bei dem der Materialpreis von Bedeutung ist, wie Verkleidungsteile an Autokarrosserien oder Maschinen, weitgehend ausgeschlossen sind.

Nach der US-PS 4 486 507 können mehrschichtige transparente Folien von gleichmässigem Streck- und Schrumpfvermögen als Verpackungsmaterial für Lebensmittel hergestellt werden.

Die eingesetzten Polyolefine, teilkristallinen linearen Copolyamide, teilaromatischen Copolyamide, amorphen Copolyamide und elastomeren Copolyamide liegen jedoch nicht als Blend oder Legierung, sondern als Schichten vor.

In den Copolyamiden bilden Polyamid 6 oder 66 den Hauptanteil. Das gewährleistet einerseits eine gute Transparenz, macht aber die mechanischen Eigenschaften, wie Steifigkeit und Festigkeit, vom Feuchtigkeitsgehalt, d.h. vom Konditionierungsgrad stark abhängig.

Es bestand deshalb die Aufgabe, Formmassen aus Polyamid-Blends zur Verfügung zu stellen, die sich durch die Kombination der folgenden Eigenschaften auszeichnen:

- in weiteren Bereichen als bisher einstellbarer, jedoch vom Konditionierungsgrad nahezu unabhängiger Steifheit und
- gleichmässiger und schlierenfreier Oberfläche infolge einwandfreier Verträglichkeit für anorganische Pigmente und Füllstoffe, sowie
- hoher Spannungsriss-Beständigkeit, auch unter Einfluss von Lösungsmitteln, wie Ketonen, aromatischen Kohlenwasserstoffen, halogenierten Kohlenwasserstoffen, Alkoholen, Benzinen, bei

- hohen Kerbschlagzähigkeiten, speziell bei tiefen Temperaturen, guter Duktilität, hoher Wärmeformbeständigkeit und Dimensionsstabilität, sowie
- guter Verträglichkeit, besonders für Formteile mit langen Fliesswegen.

Diese Aufgabe wird durch die Formmassen gemäss Anspruch 1 gelöst.

Unerwartet hat sich gezeigt, dass die geforderte Kombination von Eigenschaften durch Legierungen aus den folgenden vier Polymertypen erreicht werden kann:

A. mindestens 1 Gew.-% Polyamidelastomere aus der Reihe der Blockpolyetherpolyamide, welche aus Polyetherdiaminen, Dicarbonsäuren und/oder Dimersäuren und aus Monomeren des PA6 und des PA66, bevorzugt Caprolactam, polykondensiert werden und in der DE-OS 30 06 961 und CH 655 941 eingehend beschrieben sind.

B. mindestens 1 Gew.-% Blockpolyetheresterpolyamide, welche aus Polyetherdiolen, Dicarbonsäuren und/oder Dimersäuren und Monomeren des PA6 und des PA66, bevorzugt Caprolactam, polykondensiert werden und ebenfalls in der DE-OS 30 06 961 eingehend beschrieben sind.

Dabei ist es zur Erreichung reproduzierbarer höherer Steifheit von Vorteil, wenn die Summe der Blockpolyetherpolyamide A und Blockpolyetheresterpolyamide B höchstens 50 Gew.-%, insbesondere höchstens 30 Gew.-% und besonders bevorzugt höchstens 20 Gew.-% der Formmassen beträgt. Für flexiblere Formmassen mit geringer Steifheit betragen die Komponenten A und B gemeinsam bis zu 80 Gew.-%, insbesondere mindestens 50 Gew.-%.

C. 95 bis 5 Gew.-% mindestens eines amorphen wärmeformbeständigen Copolyamids mit einer Glasumwandlungstemperatur von mindestens 100 °C auf Basis aromatischer Dicarbonsäuren und Hexamethylendiamin als Hauptkomponente, welches ersetzt sein kann durch 20 bis 40 Mol-% gerad- oder verzweigtkettiger Diamine mit 7 bis 12 C-Atomen, speziell durch alkylsubstituierte Hexamethylendiamine, und/oder durch 2 bis 30 Mol-% cycloaliphatische Diamine mit 7 bis 22 C-Atomen und mindestens einem Cyclohexanring, wie 4,4'-Diamino-dicyclohexyl-methan, alkylsubstituierte Derivate des 4,4'-Diamino-dicyclohexyl-methans, besonders 3,3'-Dimethyl-4,4'-diamino-dicyclohexyl-methan, 3-Aminomethyl-3,5,5'-trimethylcyclohexylamin, 1,4-Diamino methylcyclohexan, 1,3-Diaminomethylcyclohexan oder cycloaliphatische Diamine mit mehreren kondensierten Ringen.

Die aromatischen Carbonsäuren sind speziell Isophthalsäure, die durch 15 bis 30 Mol-% Terephthalsäure oder tert.-Butylisophthalsäure oder durch max. 20 Mol-% einer aliphatischen Dicarbonsäure mit 6 bis 12 C-Atomen, insbesondere Adipin- oder Sebazinsäure ersetzt sein kann.

D. 0,1 bis 70 Gew.-% mindestens eines modifizierten Copolyolefins aus der Gruppe der Additionsprodukte von ungesättigten Dicarbonsäuren oder deren Derivaten an Copolyolefinelastomeren, oder ungepfropfte Copolyolefine mit ungesättigten funktionellen Comonomeren,

wobei die Summe der Bestandteile A + B + C + D 100 Gew.-% beträgt.

Die modifizierten Copolyolefine sind bevorzugt mit ungesättigten Dicarbonsäuren, wie Maleinsäure oder ihren Derivaten, gepfropfte Copolymere, wie beispielsweise Ethylen-Propylen, häufig EPM genannt, oder Ethylen-Propylen-Dien, häufig EPDM genannt (NL-PS 8 302 602) oder Copolymere mit ungesättigten funktionellen Comonomeren, wie Acrylsäuren und ihre Homologen und/oder Derivate, wie beispielsweise solche aus Ethylen und Methacrylsäureverbindungen, Olefinpolymere wie Acrylnitril-Butadien-Styrol, häufig ABS genannt (US-PS 3 134 746, US-PS 3 267 175, US-PS 3 218 371 und US-PS 4 381 371) Methylmetacrylat-Butadien-Styrol, häufig MBS genannt (US-PS 3 668 274, US-PS 3 796 771 und US-PS 3 984 497) Acrylnitrilbutadien (DE-OS 2 734 693) Styrol-Ethylen-Butadien-Styrol, häufig SEBS genannt, Styrol-Ethylen-Propylen, SEP genannt, Styrol-Ethylen-Butadien, SEB genannt, und Isopren-Acrylnitril (EP 131 113), häufig Nitril-Kautschuk genannt.

Die Anwesenheit der Blockpolyetherdiamine (A) bzw. der Blockpolyetheresterpolyamide (B) erhöht nicht nur zusätzlich das Niveau der Kerbschlagzähigkeit, sondern verbessert auch die Kompatibilität der übrigen Komponenten und das Spannungsrissverhalten wesentlich, so dass Spannungsrisse und Delaminierung bei Belastung vermieden werden. Die Anwesenheit der modifizierten Copolyolefine erhöht zusätzlich das Niveau der Kerbschlagzähigkeit und Duktilität in synergistischer Weise. Der Anteil an modifizierten Copolyolefinen beträgt 0,1 bis 70, vorzugsweise 5 bis 40 Gew.-%, besonders bevorzugt 8 bis 20 Gew.-% der gesamten Formmassen und ist stark abhängig von der Art des Copolyolefins, da beispielsweise styrolhaltige Copolyolefine den $\epsilon$-Modul erhöhen, während z.B. Ethylen/Propylen-haltige Copolymere den $\epsilon$-Modul erniedrigen und gleichzeitig die Kerbschlagzähigkeit verbessern.

Ein wesentlicher Vorteil der erfindungsgemässen Blends ist ihre gegenüber dem Feuchtigkeitsgehalt der Formmassen nahezu unempfindliche, insbesondere nicht negativ beeinflussbare Steifheit. Unerwartet hat sich gezeigt, dass die verbleibende Feuchtigkeitsaufnahme der Komponenten insbesondere auf den $\epsilon$-Modul, das heisst auf die Steifheit, auch bei geringen Anteilen des amorphen Copolyamids im 4-Komponenten-Blend nicht erniedrigend wirkt. An den erfindungsgemässen Formkörpern lassen sich im konditionierten Zustand sogar leicht erhöhte Werte des $\epsilon$-Moduls messen, wie die Tabelle, Seite 11, zeigt, während nach dem Stand der Technik Feuchtigkeit in der Funktion eines Weichmachers den $\epsilon$-Modul deutlich sinken lässt.

Gegenstand der Erfindung ist auch ein Verfahren zur Herstellung der erfindungsgemässen Formmassen, bei dessen Durchführung alle Komponenten zusammen mit den Additiven und Füllstoffen gemischt und in einem oder mehreren Extruderdurchgängen verarbeitet werden. Es ist jedoch auch möglich, einzelne oder mehrere Komponenten oder Teile davon zu den bereits schmelzgemischten übrigen Komponenten oder Anteilen davon zuzumischen.

Das kann beispielsweise an separaten Eingabeöffnungen eines Extruders geschehen.

Eine besondere Ausführungsform des Verfahrens besteht darin, eine oder beide der Komponenten A und/oder B einzeln oder gemeinsam als Blend mit Teilen oder der gesamten Menge der Komponente D in die Schmelze der restlichen Komponenten einzuarbeiten.

Dabei ist es ein erfindungsgemässer Vorteil, dass sich die Steifheit, d.h. der Zug-Elastizitätsmodul, der erfindungsgemässen Formmassen durch Variation des Gewichtsverhältnisses der Komponenten A und B zur Komponente C gezielt und reproduzierbar einstellen lässt.

So sind für einen Bereich des Zug-$\epsilon$-Moduls nach DIN 53457 von 800 bis 2400 N/mm$^2$ vorteilhaft 30 bis 80 Gew.-% amorphe Copolyamide C und 15 bis 50 Gew.-% Polyamidelastomere A und B erforderlich, während für flexible Formmassen für einen Zug-$\epsilon$-Modulbereich von 800 bis 300 N/mm$^2$ vorteilhaft bis zu 80 Gew.-% Polyamidelastomere A und B erforderlich sind.

Die erfindungsgemässen Polyamidlegierungen können noch weitere Komponenten enthalten, wie Füllstoffe, Verstärkungsmittel, Pigmente, Farbstoffe, Gleitmittel, Stabilisatoren, Keimbildner oder andere Additive. Dabei beträgt der Anteil jeder der Komponenten bis zu 30 Gew.-%, bevorzugt 5 bis 10 Gew.-%.

Sie können aber auch mit weiteren Polyamidtypen oder Fremdpolymeren legiert oder gemischt sein.

Schliesslich können weitere semikristalline Polyamide bildende Monomere, wie Lactame oder $\omega$-Aminocarbonsäuren, mit 6 bis 12 C-Atomen oder aliphatische Diamine mit 4 bis 13 C-Atomen und aliphatische Dicarbonsäuren mit 4 bis 14 C-Atomen in Mengen bis zu 60 Gew.-% der gesamten Monomeren im Blend anwesend sein.

Die beanspruchten Formmassen lassen sich auf geeigneten Verarbeitungsmaschinen besonders gut zu grossflächigen Formteilen, beispielsweise für die Herstellung von Karosserieteilen, verarbeiten, ferner zur Herstellung von Apparateteilen, wie sie in Werkzeugmaschinen und Sportgeräten Anwendung finden.

Die erfindungsgemässen Formmassen werden nachfolgend beispielhaft beschrieben.

Beispiel 1

Aus 50 Gew.-% eines amorphen Copolyamids vom Typ XE 3038 (Ems Chemie AG, Schweiz), welches eine relative Viskosität von 1,44 (0,5 % m Kresol) und eine $T_g$ von 140°C besass, 35 Gew.-% eines Blockpolyetherpolyamids, welches aus Caprolactam, der Dimersäure Pripol 1013 und dem Polyetherdiamin Jeffamin D 2000 hergestellt worden war, 5 Gew.-% eines Blockpolyetheresterpolyamids, welches aus einem Polyetherdiol-Typ Terathane 1000, der Dimersäure Pripol 1013 und Caprolactam hergestellt worden war, und 10 Gew.-% eines mit Maleinsäureanhydrid modifizierten EPM Copolyolefins vom Typ Exxelor VA 1801 (Exxon Chemicals) aus Ethylen und Propylen und zusätzlich 3 % Farbpigment, wurde nach inniger Mischung der Komponenten und Extrusion durch einen WPF Typ ZSK 30 einer Formmasse erhalten, aus welcher Prüfkörper gefertigt wurden.

Beispiel 2

40 Gew.-% eines amorphen Copolyamids, 10 Gew.-% eines Blockpolyetherpolyamids und 3 Gew.-% Farbpigment, wie im Beispiel 1 erwähnt und 50 Gew.-% eines Blockpolyetheresterpolyamids wie in Beispiel 1 erwähnt, das mit 20 Gew.-% des Copolyolefins des Beispiels 1 legiert war, wurden mittels Extrusion kompoundiert und zu Spritzgussprüfkörpern verarbeitet.

Beispiel 3

60 Gew.-% eines amorphen Copolyamids gemäss Beispiel 1 wurden mit 18 Gew.-% eines Blockpolyetherpolyamids und 2 Gew.-% eines Blockpolyetheresterpolyamids gemäss Beispiel 1 und 20 Gew.-% eines mit Maleinsäureannydrid gepfropften Copolyolefins vom Typ SEBS (Handelsname: Kraton G 1901 x, Shell Chemical Company) und zusätzliche 4 Gew.-% TiO$_2$ Pigment kompoundiert und zu Prüfkörpern verspritzt.

4

Beispiel 4

20 Gew.-% eines amorphen Copolyamids vom Typ GRIVORY G21 (Ems Chemie AG, Schweiz), welches eine relative Viskosität von 1,52 (0,5 % m Kresol) und eine $T_g$ von 122°C besass, 40 Gew.-% eines Blockpolyetheresterpolyamids gemäss Beispiel 1 und 30 Gew.-% eines Blockpolyetherpolyamids gemäss Beispiel 1, 10 Gew.-% eines Copolyolefins vom Typ EPM Exxelor VA 1801 (Exxon Chemicals) und zusätzlich 1 Gew.-% Russ-Pigment wurden kompoundiert und zu Prüfkörpern verspritzt.

Beispiel 5

55 Gew.-% eines amorphen Copolyamids vom Typ XE 3238 (Ems Chemie AG, Schweiz), welches eine relative Viskosität von 1,40 (0,5 % m Kresol) und eine $T_g$ von 175°C besass, 20 Gew.-% eines Blockpoly-etherpolyamids und 10 Gew.-% eines Blockpolyetheresterpolyamids gemäss Beispiel 1 und 15 Gew.-% eines Copolyolefins Typ (EPM) und Farbpigment gemäss Beispiel 1 wurden kompoundiert und aus der Schmelze wurden Prüfkörper hergestellt.

Beispiel 6

Die Komponenten des Beispiels 1 wurden jeweils zusammen mit 20 Gew.-% Talkum oder mit 20 Gew.-% Glasrovings kompoundiert und mittels eines Extruders vom Typ WPF ZSK 30 bei Massentemperaturen von 280°C bis 300°C extrudiert. Die daraus hergestellten, sehr steifen Prüfkörper besassen eine glatte gleichmässige Oberfläche.

| Beispiel No. | Einheit | Norm | 1 | 2 | 3 | 4 | 5 |
|---|---|---|---|---|---|---|---|
| Zusammensetzung A+B:C:D | Gew.-% | A+D:C:D | 35+5:50:10 | 10+40:40:10 | 18+2:60:20 | 30+40:20:10 | 20+10:55:15 |
| Schmelzviskosität | Pas | 270° 122,6 N | 330 | 230 | 372 | 116 | 392 |
| Glasumwandlungspunkt $T_g$ | °C | DSC | 133 | 128 | 138 | 88 | 160 |
| Oberfläche | visuell | visuell | glatt schlierenfrei | glatt schlierenfrei | gleichmäßig glatt | glatt schlierenfrei | gleichmäßig glatt |
| Spannungsrißbeständigkeit in Methanol und Chloroform | | visuell. | sehr gut | keine Rißbildung | keine Rißbildung | keine Rißbildung | keine Rißbildung |
| Schlagzähigkeit 23°/trocken | | DIN 53453 | OB | OB | OB | OB | OB |
| Kerbschlagzähigkeit 23°/trocken | kJ/m² | DIN 53453 | 33 | 33 | 43 | OB | 30 |
| Kerbschlagzähigkeit -40°/trocken | kJ/m² | DIN 53453 | 10 | 9,5 | 10,4 | 40 | 12,5 |
| Streckspannung 23°/trocken | N/mm² | DIN 53455 | 48 | 37 | 52 | - | 47 |
| Reißfestigkeit 23°/trocken | N/mm² | DIN 53455 | 39 | 43 | 43 | 28 | 43 |
| Reißdehnung 23°/trocken | % | DIN 53455 | 75 | 200 | 45 | 284 | 48 |
| Zug-E-Modul 23°/trocken | N/mm² | DIN 53457 | 1580 | 1285 | 1680 | 240 | 1660 |
| Zug-E-Modul 23°/konditioniert | N/mm² | DIN 53457 | 1550 | 1210 | 1720 | 300 | 1720 |
| Durchstoßversuch | | DIN 53443 | | | | | |
| Durchstoßarbeit bei -20° | Nm | | 59 | 56,2 | 62,5 | 59,9 | 51 |
| Duktilität bei -20° | % | Visuell | 100 | 100 | 100 | 100 | 100 |
| Schrumpf eines DIN Zugstabes (150x20x4mm) nach Temperung im Ofen 3. Stunde bei 140°C. | o/oo | | ~5 | ~6 | ~4 | - | ~4,5 |

**Patentansprüche**

1. Thermoplastische Formmassen, dadurch gekennzeichnet, dass sie aus einem 4-Komponenten-Blend aus:

6

A) mindestens 1 Gew.-% mindestens eines Blockpolyetherpolyamids bestehend aus Blöcken aus

a1) aliphatischen Dicarbonsäuren mit 6 bis 13 C-Atomen und/oder dimerisierten Fettsäuren mit bis zu 36 C-Atomen und/oder aromatischen Dicarbonsäuren mit 8 bis 12 C-Atomen und

a2) Polyetherdiaminen der allgemeinen Formel

$$H_2N(CH_2)_n\text{-}O\text{-}\{(CH_2)_4\text{-}O\}_x(CH_2)_mNH_2$$

mit x = 1 bis 54 und n,m = 1 bis 6, die auch verzweigte Ketten enthalten können, und

b) solchen aus Monomeren des PA6 und PA66

B) mindestens 1 Gew.-% mindestens eines Blockpolyetheresterpolyamids bestehend aus Blöcken aus

a1) aliphatischen Dicarbonsäuren mit 6 bis 13 C-Atomen und/oder dimerisierten Fettsäuren mit bis zu 36 C-Atomen und/oder aromatischen Dicarbonsäuren mit 8 bis 12 C-Atomen und

a2) Polyetherdiolen der allgemeinen Formel

$$HO\text{-}\{(CH_2)_x\text{-}O\}_y\text{-}(CH_2)_2\text{-}OH$$

mit x,z = 1 bis 4 und y = 1 bis 20, die auch verzweigte Ketten enthalten können und

b) solchen aus Monomeren des PA6 und PA66.

c) 95 bis 5 Gew.-% mindestens eines amorphen wärmeformbeständigen Copolyamids mit einer Glasumwandlungstemperatur von mindestens 100 °C auf Basis aromatischer Dicarbonsäuren/Hexamethylendiamin

D) 0,1 bis 70 Gew.-% mindestens eines modifizierten Copolyolefins aus der Gruppe der Additionsprodukte von ungesättigten Dicarbonsäuren oder deren Derivaten an Copolyolefinelastomeren, oder ungepfropfte Copolyolefine mit ungesättigten funktionellen Comonomeren bestehen,

wobei die Summe der Bestandteile A + B + C + D 100 Gew.-% beträgt und die Komponenten A) und B) auf der Basis der Monomeren des Polyamids 6 oder 66 aufgebaut sind.

2. Formmassen bestehend aus dem 4-Komponentenblend gemäss Anspruch 1 und weiteren verfahrens- oder anwendungsbedingten Additiven oder Füllstoffen.

3. Formmassen gemäss Anspruch 1, dadurch gekennzeichnet, dass für flexible Formmassen mit einem Zug-E-Modul nach DIN 53 457 von 300 bis 800 N/mm² die Summe von A + B bis 80 Gew.-% beträgt.

4. Formmassen gemäss Anspruch 1, dadurch gekennzeichnet, dass für steife Formmassen mit einem Zug-E.Modul nach DIN 53 457 von 800 bis 2400 N/mm2 die Summe von A + B höchstens 50 Gew.-% beträgt.

5. Formmassen gemäss Anspruch 3, dadurch gekennzeichnet, dass die Summe A + B mindestens 50 Gew.% der Formmassen beträgt.

6. Formmassen gemäss Anspruch 4, dadurch gekennzeichnet, dass die Summe A + B höchstens 30 Gew.-% der Formmassen beträgt.

7. Formmassen gemäss Anspruch 4, dadurch gekennzeichnet, dass die Summe A + B höchstens 20 Gew.-% der Formmassen beträgt.

8. Formmassen gemäss Anspruch 1 und 2, dadurch gekennzeichnet, dass die aromatischen Dicarbonsäuren Isophthalsäure und maximal 30 Mol-% Terephthalsäure sind, die durch maximal 20 Mol-% einer oder mehrerer aliphatischer Dicarbonsäuren mit 6 bis 12 C-Atomen ersetzt sein können.

9. Formmassen gemäss Anspruch 1 und 2, dadurch gekennzeichnet, dass das Hexamethylendiamin teilweise durch 20 bis 40 Mol-% mindestens eines weiteren aliphatischen Diamins mit geraden oder verzweigten Ketten mit 7 bis 12 C-Atomen und/oder durch 2 bis 30 Mol-% mindestens eines cycloaliphatischen Diamins mit 7 bis 22 C-Atomen und mindestens einem Cyclohexanring ersetzt ist.

10. Formmassen gemäss Anspruch 9, dadurch gekennzeichnet, dass die cycloaliphatischen Diamine aus der Gruppe 4,4'-Diamino-dicyclohexyl-methan, 3,3'-Dimethyl-4,4'-diamino-dicyclohexyl-methan, 3-Aminomethyl-3, 5,5'-tri-methylcyclohexylamin, 1,4, bzw. l,3-Diamino-methyl-cyclohexan ausgewählt sind.

11. Formmassen gemäss Anspruch 1, dadurch gekennzeichnet, dass die modifizierten Copolyolefine D) in Mengen von 5 bis 40 Gew.-% in der Formmasse vorhanden sind.

12. Formmassen gemäss Anspruch 11, dadurch gekennzeichnet, dass die Copolyolefine D) in Mengen von 8 bis 20 Gew.-% in der Formmasse vorhanden sind.

13. Formmassen gemäss Anspruch 1, dadurch gekennzeichnet, dass die Blockpolyetherpolyamide oder Blockpolyetheresterpolyamide Legierungen oder Blends mit den modifizierten Polyolefinen sind.

14. Verfahren zum Herstellen von thermoplastischen Formmassen, dadurch gekennzeichnet, dass sie aus einem 4-Komponenten-Blend aus:

A) mindestens 1 Gew.-% mindestens eines Blockpolyetherpolyamids bestehend aus Blöcken aus

a1) aliphatischen Dicarbonsäuren mit 6 bis 13 C-Atomen und/oder dimerisierten Fettsäuren mit bis zu 36 C-Atomen und/oder aromatischen Dicarbonsäuren mit 8 bis 12 C-Atomen und

a2) Polyetherdiaminen der allgemeinen Formel

$$H_2N(CH_2)_n\text{-}O\text{-}\{(CH_2)_4\text{-}O\}_x\text{-}(CH_2)_m NH_2$$

mit x = 1 bis 54 und n,m = 1 bis 6, die auch verzweigte Ketten enthalten können, und

b) solchen aus Monomeren des PA6 und PA66

B) mindestens 1 Gew.-% mindestens eines Blockpolyetheresterpolyamids bestehend aus Blöcken aus

a1) aliphatischen Dicarbonsäuren mit 6 bis 13 C-Atomen und/oder dimerisierten Fettsäuren mit bis zu 36 C-Atomen und/oder aromatischen Dicarbonsäuren mit 8 bis 12 C-Atomen und

a2) Polyetherdiolen der allgemeinen Formel

$$HO\text{-}\{(CH_2)_x\text{-}O\}_y\text{-}(CH_2)_z\text{-}OH$$

mit x,z = 1 bis 4 und Y = 1 bis 20, die auch verzweigte Ketten enthalten können und

b) solchen aus Monomeren des PA6 und PA66.

C) 95 bis 5 Gew.-% mindestens eines amorphen wärmeformbeständigen Copolyamids mit einer Glasumwandlungstemperatur von mindestens 100°C auf Basis aromatischer Dicarbonsäuren/Hexamethylendiamin

D) 0,1 bis 70 Gew.-% mindestens eines modifizierten Copolyolefins aus der Gruppe der Additionsprodukte von ungesättigten Dicarbonsäuren oder deren Derivaten an Copolyolefinelastomeren, oder ungepfropfte Copolyolefine mit ungesättigten funktionellen Comonomeren bestehen,

wobei die Summe der Bestandteile A + B + C + D 100 Gew.-% beträgt und die Komponenten A) und B) auf der Basis der Monomeren des Polyamids 6 oder 66 aufgebaut sind, wobei alle Komponenten zusammen mit den Additiven und Füllstoffen gemischt und in einem oder mehreren Extruderdurchgängen verarbeitet werden.

15. Verfahren zur Herstellung von Formmassen gemäss Anspruch 9, dadurch gekennzeichnet, dass mindestens eine der Komponenten A) bis D) mit Additiven und/oder Füllstoffen gemischt, mindestens eine der Komponenten ganz oder teilweise während der Extrusion der Schmelze der übrigen Komponenten zugemischt oder eine der Komponenten, mindestens mit einer der anderen Komponenten vorgemischt und so den übrigen Komponenten zugemischt wird.

16. Verwendung der Formmassen gemäss einem der vorangehenden Ansprüche zur Herstellung von Formteilen durch Extrusion oder Spritzguss.

**Claims**

1. Thermoplastic moulding compositions characterised in that they comprise a 4-component blend of:

A) at least 1% by weight of at least one block polyetherpolyamide comprising blocks of

a1) aliphatic dicarboxylic acids having 6 to 13 C atoms and/or dimerised fatty acids having up to 36 C atoms and/or aromatic dicarboxylic acids having 8 to 12 C atoms and

a2) polyetherdiamines of the general formula

$$H_2N(CH_2)_n\text{-}O\text{-}\{(CH_2)_4\text{-}O\}_x\text{-}(CH_2)_mNH_2$$

wherein x = 1 to 54, and n,m = 1 to 6, which can also contain branched chains, and
b) those of PA6 and PA66 monomers

B) at least 1% by weight of at least one block polyetheresterpolyamide comprising blocks of
a1) aliphatic dicarboxylic acids having 6 to 13 C atoms and/or dimerised fatty acids having up to 36 C atoms and/or aromatic dicarboxylic acids having 8 to 12 C atoms and
a2) polyether diols of the general formula

$$HO\text{-}\{(CH_2)_x\text{-}O\}_y\text{-}(CH_2)_z\text{-}OH$$

wherein x,z = 1 to 4, and y = 1 to 20, which can also contain branched chains, and
b) those of PA6 and PA66 monomers

C) 95 to 5% by weight of at least one amorphous copolyamide which is dimensionally heat-stable, having a glass transition temperature of at least 100°C, **based on aromatic carboxylic** acids/hexamethylenediamine

D) 0.1 to 70% by weight of at least one modified copolyolerin selected from the group of addition products of unsaturated dicarboxylic acids or their dervatives on copolyolefin elastomers, or ungrafted copolyolefins with unsaturated functional comonomers,

wherein the sum of the components A + B + C + D is 100% by weight and the components A) and B) are made up on the basis of the monomers of polyamide 6 or 66.

2. Moulding compositions comprising a 4-component blend according to claim 1 and also additives or fillers required for processing or use.

3. Moulding compositions according to claim 1, characterised in that, for flexible moulding compositions having a tensile E modulus according to DIN 53457 of 300 to 800 N/mm$^2$, the sum of A + B is up to 80% by weight.

4. Moulding compositions according to claim 1, characterised in that, for rigid moulding compositions having a tensile E modulus according to DIN 53457 of 800 to 2400 N/mm$^2$, the sum or A + B is no more thin 50% by weight.

5. Moulding compositions according to claim 3, characterised in that the sum A + B is at least 50% by weight of the moulding compositions.

6. Moulding compositions according to claim 4, characterised in that the sum A + B is at most 30% by weight of the moulding compositions.

7. Moulding compositions according to claim 4, characterised in that the sum A + B is at most 20% by weight of the moulding compositions.

8. Moulding compositions according to claim 1 and 2, characterised in that the aromatic dicarboxylic acids are isophthalic acid and a maximum of 30 mol-% terephthalic acid, of which up to 20 mol-% can be replaced by one or more aliphatic dicarboxylic acids having 6 to 12 C atoms.

9. Moulding compositions according to claim 1 and 2, characterised in that the hexamethylenediamine can be replaced in part by 20 to 40 mol-% of at least one further aliphatic diamine with straight or branched chains and having 7 to 12 C atoms and/or by 2 to 30 mol-% of at least one cycloaliphatic diamine having 7 to 22 C atoms and at least one cyclohexane ring.

10. Moulding compositions according to claim 9, characterised in that the cycloaliphatic diamines are selected from the group of 4,4'-diaminodicyclohexylmethane, 3,3'-dimethyl-4,4'-diaminodicyclohexylmethane, 3-aminomethyl-3,5,5-trimethylcyclohexylamine, 1,4- or 1,3-diaminomethylcyclohexane. 3-aminomethyl-3,5,5'-trimethycyclohexylamine, 1,4- or 1,3-diaminomethylcyclohexane.

**11.** Moulding compositions according to claim 1, characterised in that the modified copolyolefins D) are present in amounts of 5 to 40% by weight in the moulding composition.

**12.** Moulding compositions according to claim 11, characterised in that the copolyolefins D) are present in amounts of 8 to 20% by weight in the moulding composition.

**13.** Moulding compositions according to claim 1, characterized in that the block polyetherpolyamides or block polyetheresterpolyamides are alloys or blends with the modified polyolefins.

**14.** Process for the preparation of thermoplastic moulding compositions characterised in that they comprise a 4-component blend of:

A) at least 1% by weight of at least one block polyetherpolyamide comprising blocks of

a1) aliphatic dicarboxylic acids having 6 to 13 C atoms and/or dimerised fatty acids having up to 36 C atoms and/or aromatic dicarboxylic acids having 8 to 12 C atoms and

a2) polyetherdiamines of the general formula

$$H_2N(CH_2)_n\text{-O-}\{(CH_2)_4\text{-O}\}_x\text{-}(CH_2)_mNH_2$$

wherein X = 1 to 54, and n,m = 1 to 6, which can also contain branched chains, and

b) those of PA6 and PA66 monomers

B) at least 1% by weight of least one block polyetheresterpolyamide comprising blocks of

a1) aliphatic dicarboxylic acids having 6 to 13 C atoms and/or dimerised fatty acids having up to 36 C atoms and/or aromatic dicarboxylic acids having 8 to 12 C atoms and

a2) polyether diols of the general formula

$$HO\text{-}\{(CH_2)_x\text{-O}\}_y\text{-}(CH_2)_z\text{-OH}$$

wherein x,z = 1 to 4, and y = 1 to 20, which can also contain branched chains, and

b) those of PA6 and PA66 monomers

C) 95 to 5% by weight of at least one amorphous copolyamide which is dimensionally heat-stable, having a glass transition temperature of at least 100°C, **based on aromatic carboxylic** acids/hexamethylenediamines

D) 0.1 to 70% by weight of at least one modified copolyolefin selected from the group of addition products of unsaturated dicarboxylic acids or their derivatives on copolyolefin elastomers, or ungrafted copolymers with unsaturated functional comonomers,

wherein the sum of the components A + B + C + D is 100% by weight and the components A) and B) are made up on the basis of the monomers of polyamide 6 or 66, which comprises mixing all the components, together with additives and fillers, and processing them in one or more extruders.

**15.** Process for the preparation of moulding materials according to claim 9, characterised in that at least one of components A) to D) is mixed with additives and/or fillers, at least one of the components is added wholly or partially during the extrusion of the melt of the remaining components, or one of the components is pre-mixed with at least one of the other components and thus added to the remaining components.

**16.** Use of the moulding compositions according to one of the preceding claims for producing mouldings by extrusion or injection-moulding.

## Revendications

**1.** Matières à mouler thermoplastiques, caractérisées en ce qu'elles sont constituées d'un mélange de 4 composants constitué de :

A) au moins 1 % en poids d'au moins un copolymère séquencé polyéther polyamide composé de séquences

a1) d'acides dicarboxyliques aliphatiques comportant entre 6 et 13 atomes de carbone et/ou d'acides gras dimères comportant jusqu'à 36 atomes de carbone et/ou d'acides dicarboxyliques aromatiques comportant entre 8 et 12 atomes de carbone et

a2) de polyétherdiamines de formule générale

$$H_2N(CH_2)_n\text{-}O\text{-}[(CH_2)_4\text{-}O]_x\text{-}(CH_2)_mNH_2$$

avec x = 1 à 54 et n, m = 1 à 6, qui peuvent également contenir des chaînes ramifiées, et
b) de monomères du polyamide 6 et du polyamide 6-6,
B) au moins 1 % en poids d'au moins un copolymère séquencé poly(éther ester)-polyamide composé de séquences
a1) d'acides dicarboxyliques aliphatiques comportant entre 6 et 13 atomes de carbone et/ou d'acides gras dimères comportant jusqu'à 36 atomes de carbone et/ou d'acides dicarboxyliques aromatiques comportant entre 8 et 12 atomes de carbone et
a2) polyétherdiols de formule générale

$$HO)[(CH_2)_x\text{-}O]_Y\text{-}(CH_2)_z\text{-}OH$$

avec x,z = 1 à 4 et Y = 1 à 20, qui peuvent contenir également des chaînes ramifiées, et
b) de monomères du polyamide 6 et du polyamide 6-6,
C) 95 à 5 % en poids d'au moins un copolyamide amorphe présentant une stabilité dimensionnelle à chaud avec une température de transition vitreuse d'au moins 100 °c à base de diacides aromatiques/hexaméthylènediamine,
D) 0,1 à 70 % en poids d'au moins une copolyoléfine modifiée du groupe des produits d'addition d'acides dicarboxyliques insaturés ou de leurs dérivés sur des copolyoléfines élastomères, ou des copolyoléfines non coiffées comportant des comonomères fonctionnels insaturés,
la somme des composants A + B + C + D étant égale à 100% en poids et les composants A) et B) étant construits sur la base des monomères de polyamide 6 ou 6-6.

2. Matières à mouler constituées du mélange de 4 composants conforme à la revendication 1 et d'autres additifs ou charges en fonction du procédé de mise en oeuvre et des applications.

3. Matières à mouler conformes à la revendication 1, caractérisées en ce que pour des matières à mouler flexibles ayant un module d'élasticité en traction égal à 300 à 800 N/mm$^2$ (selon la norme DIN 53 457), la somme de A + B est égale à 80 % en poids.

4. Matières à mouler conformes à la revendication 1, caractérisées en ce que pour des matières à mouler rigides ayant un module d'élasticité en traction égal à 800 à 2400 N/mm$^2$ (selon la norme DIN 53 457), la somme de A + B est au plus égale à 50 % en poids.

5. Matières à mouler conformes à la revendication 3, caractérisées en ce que la somme de A + B est au moins égale à 50% en poids des matières à mouler.

6. Matières à mouler conformes à la revendication 4, caractérisées en ce que la somme de A + B est au plus égale à 30 % en poids des matières à mouler.

7. Matières à mouler conformes à la revendication 4, caractérisées en ce que la somme de A + B est au plus égale à 20 % en poids des matières à mouler.

8. Matières à mouler conformes à la revendication 1 et 2, caractérisées en ce que les acides dicarboxyliques aromatiques sont l'acide isophtalique et au plus 30% en mole d'acide téréphtalique, pouvant être substitués par au plus 20 % en mole d'un ou de plusieurs acides dicarboxyliques aliphatiques comportant entre 6 et 12 atomes de carbone.

9. Matières à mouler conformes à la revendication 1 ou 2, caractérisées en ce que l'hexaméthylènediamine est remplacée partiellement par 20 à 40 % en moles d'au moins une autre diamine ayant une chaîne linéaire ou ramifiée comportant entre 7 et 12 atomes de carbone et/ou par 2 à 30 % en moles d'au moins une diamine cycloaliphatique comportant entre 7 et 22 atomes de carbone et au moins un noyau cyclohexane.

**10.** Matières à mouler conformes à la revendication 9, caractérisées en ce que la diamine cycloaliphatique est choisie dans le groupe constitué de 4,4'-diaminodicyclohexylméthane, 3,3'-diméthyl-4,4'-diaminodicyclohexylméthane, 3-aminométhyl-3, 5, 5'-triméthylcyclohexylamine, 1,4, ou 1,3-diaminométhylcyclohexane.

**11.** Matières à mouler conformes à la revendication 1, caractérisées en ce que les copolyoléfines modifiées D) sont présentes dans la matière à mouler à raison de 5 à 40 % en poids.

**12.** Matières à mouler conformes à la revendication 11, caractérisées en ce que les copolyoléfines D) sont présentes dans la matière à mouler à raison de 8 à 20 % en poids.

**13.** Matières à mouler conformes à la revendication 1, caractérisées en ce que les copolymères séquencés polyéther-polyamide ou poly(éther ester)-polyamide sont des mélanges ou alliages avec les polyoléfines modifiés.

**14.** Procédé de préparation de matières a mouler thermoplastiques, caractérisées en ce qu'elles sont constituées d'un mélange de 4 composants constitué de :

A) au moins 1 % en poids d'au moins un copolymère séquencé polyéther polyamide composé de séquences

a1) d'acides dicarboxyliques aliphatiques comportant entre 6 et 13 atomes de carbone et/ou d'acides gras dimères comportant jusqu'à 36 atomes de carbone et/ou d'acides dicarboxyliques aromatiques comportant entre 8 et 12 atomes de carbone et

a2) de polyétherdiamines de formule générale

$$H_2N(CH_2)_n\text{-}O\text{-}[(CH_2)_4\text{-}O]_x\text{-}(CH_2)_mNH_2$$

avec x = 1 à 54 et n, m = 1 à 6, qui peuvent également contenir des chaînes ramifiées, et

b) de monomères du polyamide 6 et du polyamide 6-6,

B) au moins 1 % en poids d'au moins un copolymère séquencé poly(éther ester)-polyamide composé de séquences

a1) d'acides dicarboxyliques aliphatiques comportant entre 6 et 13 atomes de carbone et/ou d'acides gras dimères comportant jusqu'à 36 atomes de carbone et/ou d'acides dicarboxyliques aromatiques comportant entre 8 et 12 atomes de carbone et

a2) polyétherdiols de formule générale

$$HO)[(CH_2)_x\text{-}O]_y\text{-}(CH_2)_z\text{-}OH$$

avec x,z = 1 à 4 et Y = 1 à 20, qui peuvent contenir également des chaînes ramifiées, et

b) de monomères du polyamide 6 et du polyamide 6-6,

C) 95 à 5 % en poids d'au moins un copolyamide amorphe présentant une stabilité dimensionnelle à chaud avec une température de transition vitreuse d'au moins 100 °C à base de diacides aromatiques/hexaméthylènediamine,

D) 0,1 à 70 % en poids d'au moins une copolyoléfine modifiée du groupe des produits d'addition d'acides dicarboxyliques insaturés ou de leurs dérivés sur des copolyoléfines élastomères, ou des copolyoléfines non coiffées comportant des comonomères fonctionnels insaturés,

la somme des composants A + B + C + D étant égale à 100% en poids et les composants A) et B) étant construits sur la base des monomères de polyamide 6 ou 6-6, et tous les composants étant mélangés avec les additifs et charges et mis en oeuvre par uns ou plusieurs étapes d'extrusion.

**15.** Procédé pour la préparation de matières à mouler conformes à la revendication 9, caractérisé en ce que l'on mélange au moins un des composants A) à D) avec des additifs et/ou des charges, que l'on ajoute au moins un des composants entièrement ou partiellement lors de l'extrusion à la masse fondue des autres composants ou que l'on ajoute aux autres composants un des composants, préalablement mélangé avec au moins un autre composant.

**16.** Utilisation des matières à mouler conformes à une des revendications précédentes pour la fabrication de pièces moulées par extrusion ou moulage par injection.